Europäisches Patentamt

European Patent Office

Office européen des brevets

(11) Numéro de publication : **0 036 084**
**B1**

(12) **FASCICULE DE BREVET EUROPÉEN**

(45) Date de publication du fascicule du brevet :
26.06.85

(21) Numéro de dépôt : 81101072.7

(22) Date de dépôt : 16.02.81

(51) Int. Cl.⁴ : **H 04 L   7/10**, H 04 L 27/22

(54) Procédé et dispositif pour commander l'ajustement initial de l'horloge d'un récepteur de données synchrone.

(30) Priorité : 19.03.80 FR 8006542

(43) Date de publication de la demande :
23.09.81 Bulletin 81/38

(45) Mention de la délivrance du brevet :
26.06.85 Bulletin 85/26

(84) Etats contractants désignés :
DE FR GB IT

(56) Documents cités :
EP-A- 0 003 943
FR-A- 2 418 584
US-A- 3 978 407

(73) Titulaire : **International Business Machines Corporation**
**Old Orchard Road**
**Armonk, N.Y. 10504 (US)**

(72) Inventeur : **Godard, Dominique Noel**
**1, Chemin des Chênes**
**F-06650 Le Rouret (FR)**
Inventeur : **Quintin, Michel Yves**
**Quartier Le Seren**
**F-06610 La Gaude (FR)**

(74) Mandataire : **de Pena, Alain**
**Compagnie IBM France Département de Propriété Industrielle**
**F-06610 La Gaude (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

## Domaine Technique

La présente invention concerne les systèmes de transmission de données numériques synchrones, et plus particulièrement un procédé et un dispositif pour commander l'ajustement initial de l'horloge dans un récepteur de données comprenant un égaliseur adaptatif. La présente invention est particulièrement bien adaptée pour l'ajustement intial de l'horloge des récepteurs dans un système de transmission de données arrangé en réseau multipoint.

## Etat de la Technique Antérieure

Dans les systèmes de transmission de données numériques synchrones, la séquence de bits à transmettre est tout d'abord convertie en une séquence de symboles. Ces symboles sont ensuite transmis un par un à des instants régulièrement espacés de T secondes appelés instants de signalisation et déterminés par l'horloge de l'émetteur, en utilisant la technique de modulation d'une onde porteuse qui consiste à faire correspondre à chaque symbole une valeur discrète de l'une ou plusieurs caractéristiques (amplitude, phase) de l'onde porteuse. L'onde porteuse, ou porteuse, ainsi modulée est transmise à travers le canal de transmission. La porteuse modulée n'est représentative des données qu'aux instants de signalisation, et il est essentiel pour une détection correcte des données que le récepteur dispose d'une horloge précise indiquant les instants de signalisation auxquels le signal reçu du canal de transmission doit être échantillonné. L'horloge du récepteur doit être continuellement ajustée en fréquence et en phase pour optimiser les instants d'échantillonnage du signal reçu et compenser les écarts de fréquence et de phase entre les horloges de l'émetteur et du récepteur.

L'ajustement de l'horloge du récepteur comprend en fait deux opérations principales distinctes : une opération dite de maintien de synchronisation, et une opération dite d'ajustement initial.

L'opération de maintien de synchronisation se situe pendant la transmission des données. Au cours de cette opération, l'horloge du récepteur est ajustée continuellement en fonction d'une information de chronologie dérivée du signal de données reçu.

L'opération d'ajustement initial de l'horloge se situe pendant une période de mise en route, avant la transmission des données proprement dites. En général, chaque message de données est précédé par un signal de synchronisation d'horloge connu envoyé par l'émetteur et des moyens internes au récepteur dérivent du signal de synchronisation reçu un signal de commande pour ajuster l'horloge du récepteur. On comprendra que pour obtenir un bon rendement de la transmission, il est impératif d'utiliser un signal de synchronisation dont la durée soit aussi courte que possible par rapport à celle du message de données. Dans les systèmes dans lesquels la durée des messages de données est très longue, la durée du signal de synchronisation n'est pas critique. Par contre, dans certains systèmes, comme par exemple dans les systèmes multipoints, la durée du signal de synchronisation doit être très brève pour les raisons exposées brièvement ci-après.

Dans les systèmes de transmission de données arrangés en réseau multipoint, plusieurs équipements terminaux de données échangent des données à travers une ligne de transmission commune. Chaque équipement terminal est relié à la ligne de tranmsission commune à travers un modem qui comprend un émetteur et un récepteur de données. Tous les équipements terminaux n'ont pas le même degré d'intelligence et en général l'un d'eux, qui est souvent un calculateur, contrôle l'ensemble du réseau et la transmission de données se fait entre ce calculateur et les autres équipements terminaux de données. Une des particularités de ces systèmes est qu'un très grand nombre de messages envoyés par les équipements terminaux de données au calculateur sont constitués par de brèves réponses à une interrogation et sont ainsi très courts, et ces systèmes nécessitent donc un signal de synchronisation très court.

Pour pouvoir utiliser un signal de synchronisation de courte durée, il est nécessaire de disposer dans le récepteur d'un dispositif qui permette un ajustement initial très rapide de l'horloge du récepteur.

Dans les systèmes de transmission de données, il est connu d'utiliser une période de mise en route au cours de laquelle sont successivement transmis un signal de synchronisation d'horloge et une séquence d'initialisation d'égaliseur. Une telle période de mise en route est recommandée par les avis V27 et V29 du CCITT et est aussi connue du document US-A-3 978 407.

La demande de brevet européen n° 79430002.0 publiée sous le n° 0003943 décrit un procédé pour l'ajustement initial rapide de l'horloge d'un récepteur, qui utilise un signal de synchronisation dont le spectre comprend deux composantes aux fréquences $F_1 = f_c = 1/2T$ et $f_2 + 1/2T$ ou $f_c$ est la fréquence porteuse et $1/T$ la cadence de signalisation. Selon le procédé la phase initiale de l'horloge est déterminée en calculant la phase du coefficient à la fréquence $1/T$ de la transformée de Fourier discrète d'un nombre prédéterminé d'échantillons du signal de synchronisation reçu élevé au carré. Le procédé décrit brièvement ci-dessus permet d'obtenir un ajustement de l'horloge du récepteur avec un signal de synchronisation très court. Par exemple, dans le cas d'une transmission à 9 600 bits par seconde avec une cadence de synchronisation égale à 2 400 Hz, avec ce procédé l'horloge peut être ajustée avec un signal de synchronisation ne comprenant que 12 symboles.

L'inconvénient de ce procédé est qu'il utilise un signal de synchronisation particulier, et que pour cela, il faut s'assurer que le signal de synchronisation est bien reçu par le récepteur avant de valider la valeur de phase initiale fournie par le procédé. Si p symboles sont nécessaires à la détermination de la valeur de phase initiale, et si p' symboles sont nécessaires à la détection du signal de synchronisation, celui-ci devra comprendre au moins p + p' symboles, ce qui peut être assez long par rapport à la longueur du message qui suit. Si en outre, le signal de synchronisation ne comprend que p + p' symboles, et si dans certaines conditions, le signal de synchronisation n'est détecté qu'après que plus de p' échantillons aient été reçus, la valeur de phase initiale sera déterminée à partir de moins de p échantillons et être ainsi erronée.

## Exposé de l'invention

L'objet principal de l'invention est de fournir un procédé et un dispositif pour l'ajustement initial de l'horloge d'un récepteur de données synchrone qui permettent l'utilisation d'un signal de synchronisation d'une durée aussi brève que possible.

Cet objet et d'autres sont atteints d'une manière générale par le procédé de l'invention qui permet, dans un récepteur de données synchrone comprenant une horloge et un égaliseur adaptatif, l'ajustement initial de l'horloge pendant une période de mise en route au cours de laquelle le récepteur reçoit un signal de synchronisation d'horloge connu suivi par une séquence d'initialisation d'égaliseur connue. Selon le procédé de l'invention, on échantillonne le signal reçu et les échantillons du signal reçu sont stockés dans un moyen d'emmagasinage. On détecte le signal de synchronisation puis le début de la séquence d'initialisation. Lorsque le début de la séquence d'initialisation est détecté on sait où sont stockés les échantillons propres du signal de synchronisation reçu et on détermine à partir de ces échantillons qui sont stockés dans des positions prédéterminées du moyen d'emmagasinage un signal de commande pour l'ajustement initial de l'horloge.

Selon un mode de réalisation préféré de l'invention on détermine ledit signal de commande à partir des échantillons qui précèdent les G échantillons reçus qui précèdent immédiatement le début de la séquence d'initialisation, le nombre G étant choisi de façon à ne pas utiliser les échantillons qui se situent au voisinage de la région de transition entre le signal de synchronisation et la séquence d'initialisation.

Selon un autre mode de réalisation, lorsque le récepteur utilise un signal de synchronisation dont le spectre de fréquence comprend trois composantes distinctes aux fréquences $f_c$, $f_1$ et $f_2$, $f_c$ étant la fréquence de la porteuse et les fréquences $f_1$ et $f_2$ étant définies par les relations :

$$f_1 = f_c - 1/2T \quad f_2 = f_c + 1/2T$$

1/T étant la cadence de signalisation, le signal de commande est dérivé des valeurs absolues des échantillons du signal reçu.

D'autres objets, caractéristiques et avantages de la présente invention ressortiront mieux de l'exposé qui suit, fait en référence aux dessins annexés à ce texte, qui représentent un mode de réalisation préféré de celle-ci.

## Brève Description des Figures

La figure 1   représente le bloc diagramme d'un récepteur incorporant l'invention.
La figure 2   illustre un signal de synchronisation suivi par une séquence d'initialisation.
La figure 3   est un exemple de réalisation du détecteur de signaux 39 de la figure 1.

## Mode de Réalisation de l'Invention

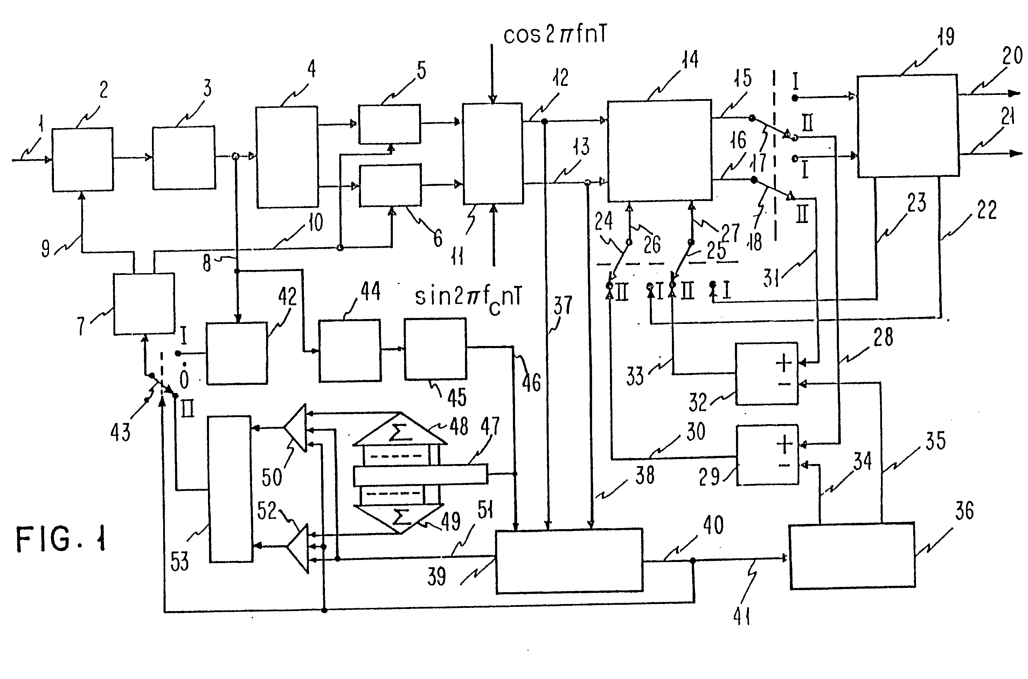

Pour situer l'invention dans son contexte, on a représenté sur la figure 1 le bloc diagramme typique d'un récepteur 9 600 bits par seconde conforme à l'avis V29 du CCITT et incorporant l'invention. Ce récepteur utilise une modulation à double bande latérale-porteuses en quadrature (DSB-QC). Le terme modulation DSB-QC est utilisé ici au sens large de façon à inclure tous les systèmes dans lesquels le signal transmis peut être représenté par la superposition de deux porteuses en quadrature modulées en amplitude. Le terme modulation DSB-QC inclut notamment la modulation par sauts de phase, la modulation par sauts de phase et d'amplitude combinés, et la modulation d'amplitude en quadrature. Le signal reçu du canal de transmission, dont l'énergie a été normalisée par un circuit de contrôle automatique de gain (non représenté) et qui a été filtré par un filtre passe-bande (non représenté) qui rejette le bruit hors bande, est appliqué par une ligne 1 à un dispositif d'échantillonnage 2 dans lequel il est échantillonné à la cadence 1/τ. La cadence 1/τ est choisie égale à un multiple m/T de la cadence de signalisation 1/T de façon à ce que l'on dispose à la sortie du dispositif 2 d'un nombre d'échantillons suffisant pour bien définir le signal reçu. La valeur de l'amplitude de ces échantillons est convertie en numérique dans un convertisseur analogique-numérique 3 et appliquée à l'entrée d'un transformateur de Hilbert numérique 4.

Un transformateur de Hilbert est un dispositif qui a une entrée et deux sorties et qui fournit respectivement à ses deux sorties les composantes en phase et en quadrature du signal appliqué à son entrée. On en trouvera un exemple de réalisation numérique dans l'article « Theory and Implementation of the Discrete Hilbert Transform », paru dans « Digital Signal Processing », L.R. Rabiner et C.M. Rader, 1972 IEEE Press.

Les composantes en phase et en quadrature du signal reçu, fournies par le transformateur de Hilbert 4 sont respectivement ré-échantillonnées à la cadence de signalisation 1/T par deux dispositifs d'échantillonnage 5 et 6. Une horloge constituée par un oscillateur à verrouillage de phase numérique (PLO) 7 a son entrée reliée par une ligne à la sortie du convertisseur analogique-numérique 3 et commande le dispositif d'échantillonnage 2, par une ligne 9, les dispositifs d'échantillonnage 5 et 6 par une ligne 10 et tous les autres composants du récepteur par des lignes non représentées. Un oscillateur PLO numérique est un dispositif connu qui comprend en général un oscillateur à quartz qui fournit une onde sinusoïdale de fréquence élevée. Cette onde sinusoïdale est mise en forme carrée et appliquée à une chaîne de diviseurs qui fournit des impulsions à la fréquence désirée. On peut faire varier la phase de ces impulsions en faisant varier les rapports de division dans la chaîne de diviseurs en fonction du signal appliqué à l'entrée de commande de l'oscillateur PLO. Les composantes en phase et en quadrature du signal reçu, disponibles respectivement à la sortie des dispositifs d'échantillonnage 5 et 6, sont appliquées aux entrées d'un démodulateur complexe 11. Le démodulateur 11 reçoit d'une source locale non représentée une porteuse en phase de la forme cos $2\pi f_c nT$, et une porteuse en quadrature de la forme sin $2\pi f_c nT$ ; $f_c$ étant la fréquence de la porteuse et n un nombre entier positif qui varie de zéro à l'infini. Si on désigne par $r_n$ le signal reçu à l'instant de signalisation nT, ses composantes en phase et en quadrature disponibles respectivement à la sortie des dispositifs d'échantillonnage 5 et 6 peuvent être désignées par $r_{i,n}$ et $r_{q,n}$, respectivement. Le démodulateur 11 fournit sur les lignes 12 et 13 les composantes en phase et en quadrature, respectivement $y_{i,n}$ et $y_{q,n}$, du signal reçu démodulé $y_n$, conformément aux relations connues :

$$y_{i,n} = r_{i,n} \cos \omega_c t + r_{q,n} \sin \omega_c t \tag{1}$$

$$y_{q,n} = - r_{i,n} \sin \omega_c t + r_{q,n} \cos \omega_c t \tag{2}$$

Les composantes en phase et en quadrature du signal reçu démodulé, disponibles sur les lignes 12 et 13, sont appliquées aux entrées d'un égaliseur transversal complexe adaptatif 14 dont on trouvera un exemple de réalisation dans le brevet français N° 73 26404 déposé par la demanderesse le 12 juillet 1973 et publié sous le N° 2 237 379.

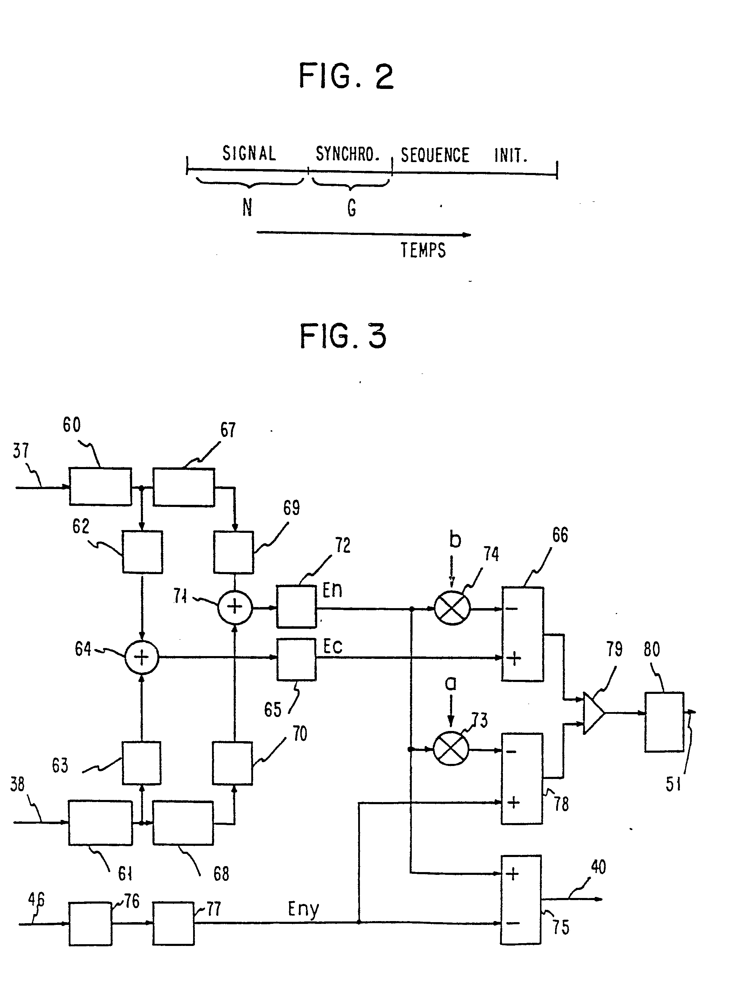

Les composantes en phase et en quadrature du signal égalisé sont respectivement appliquées par des lignes 15 et 16 à l'entrée commune de deux commutateurs à deux positions 17 et 18. Les positions I des commutateurs 17 et 18 sont reliées aux entrées d'un système de détection de données 19 qui fournit respectivement sur des lignes 20 et 21 les composantes en phase et en quadrature des symboles de données détectés. Le système 19 fournit en outre sur des lignes 22 et 23 les composantes en phase et en quadrature d'un signal d'erreur représentatif de l'écart entre les composantes du signal égalisé et celles du symbole de données détecté correspondant. On trouvera un exemple de réalisation d'un système de détection de données dans le brevet français N° 74 43560 déposé par la demanderesse le 27 décembre 1974 et publié sous le N° 2 296 322. Les lignes 22 et 23 sont reliées respectivement à la position I de deux commutateurs à deux positions 24 et 25 dont les sorties communes sont reliées respectivement à l'égaliseur 14 par des lignes 26 et 27. La position II du commutateur 17 est reliée par une ligne 28 à l'entrée (+) d'un soustracteur 29 dont la sortie est reliée à la position II du commutateur 24 par une ligne 30. La position II du commutateur 18 est reliée par une ligne 31 à l'entrée (+) d'un soustracteur 32 dont la sortie est reliée à la position II du commutateur 25 par une ligne 33. Les entrées (−) des soustracteurs 29 et 32 sont reliées respectivement par des lignes 34 et 35 à la sortie d'un générateur de séquence d'initialisation de référence 36. Les lignes 12 et 13 sont en outre reliées respectivement par deux lignes 37 et 38 aux entrées d'un détecteur de signaux 39 qui sera décrit en détail en référence à la figure 3. Il a une sortie 40 reliée au générateur 36 par une ligne 41 et aux commutateurs 17, 18, 24 et 25 par des lignes non représentées.

La sortie du convertisseur analogique-numérique 3 est en outre appliquée à un dispositif de maintien de synchronisation 42 dont la sortie est reliée à la position I d'un commutateur à trois positions 43. Il existe de nombreux dispositifs de maintien de synchronisation et on pourra utiliser, par exemple, l'un des dispositifs décrits en référence aux figures 3, 6 et 7 du brevet français N° 75 14020 publié sous le N° 2 309 089. La sortie du commutateur 43 est reliée à l'entrée de commande de l'oscillateur PLO 7.

La sortie du convertisseur analogique-numérique 3 est en outre appliquée à un filtre réjecteur 44 centré sur la fréquence $f_c$ et qui rejette cette fréquence. Un tel filtre aura typiquement comme fonction de transfert :

$$1 - (2 \cos 2\pi f_c \tau) Z^{-1} + Z^{-2}$$

La sortie du filtre 44 est appliquée à un dispositif de détermination de valeur absolue 45 dont la sortie est reliée par une ligne 46 au détecteur de signaux 39 et l'entrée d'une ligne à retard numérique 47. La ligne à retard 47 est constituée par un registre à décalage à 66 étages, chacun d'eux ayant la capacité de stocker la valeur absolue d'un échantillon sous forme numérique, et le contenu du registre à décalage est décalé de la droite vers la gauche sur la figure à la cadence d'échantillonnage $1/\tau$. Les sorties des 19e, 21e, ..., 65e étages sont reliées aux entrées d'un dispositif de sommation 48 alors que les sorties des 20e, 22e, ..., 66e étages sont reliées aux entrées d'un dispositif de somation 49. La sortie du dispositif de sommation 48 est reliée à une entrée d'une porte 50 dont les autres entrées sont reliées à la sortie 40 du détecteur de signaux 39 et à une autre sortie 51 de ce détecteur. La sortie du dispositif de sommation 49 est reliée à une entrée d'une porte 52 dont les autres entrées sont reliées aux sorties 40 et 51 du détecteur de signaux 39. Les sorties des portes 50 et 52 sont reliées aux deux entrées d'un résolveur numérique 53. Un résolveur est un dispositif connu qui reçoit comme entrées les valeurs du cosinus et du sinus d'un angle et fournit à sa sortie la valeur de cet angle. On trouvera une description détaillée d'un résolveur numérique dans, par exemple, le brevet français N° 71 47850 publié sous le N° 2 164 544. La sortie du résolveur 53 est reliée à la position II du commutateur 43 dont la troisième position référencée, positon 0, est libre. Le commutateur 43 est commandé notamment par la sortie 40 du détecteur de signaux 39.

On supposera que le récepteur de la figure 1 reçoit des messages de données et que chacun de ces messages est précédé par un préambule comprenant un signal de synchronisation d'horloge suivi par une séquence d'initialisation d'égaliseur.

Initialement, le commutateur 43 est en position 0 et les commutateurs 17, 18, 24 et 25 sont en position I. Le récepteur reçoit tout d'abord le signal de synchronisation. Celui-ci est échantillonné à la cadence $1/\tau$ par le dispositif 2, et converti en numérique par le convertisseur 3 et ses échantillons sont chargés successivement dans la ligne à retard 47 après avoir été filtrés par le filtre 44, et redressés par le dispositif de valeur absolue 45. Le transformateur de Hilbert 4 fournit les composantes en phase et en quadrature du signal de synchronisation qui respectivement sont échantillonées à la cadence $1/T$ dans les dispositifs 5 et 6 puis démodulées dans le démodulateur 11 et appliquées au détecteur de signaux 39. Les sorties de l'égaliseur 14 et du système de détection de données 19 sont ignorées.

Lorsque le détecteur de signaux 39 détecte le signal de synchronisation, il fait passer la sortie 51 au niveau haut. Le récepteur reçoit ensuite la séquence d'initialisation d'égaliseur qui est appliquée au détecteur de signaux 39 de façon similaire.

Lorsque le détecteur de signaux 39 détecte la séquence d'initialisation, sa sortie 40 passe au niveau haut, ce qui rend conductrices les portes 50 et 52 et provoque la commutation du commutateur 43 en position II, et le dispositif d'ajustement initial de l'horloge, que constituent notamment les dispositifs de sommation 48 et 49 et le résolveur 53, détermine à partir des échantillons stockés dans la ligne à retard 47 un signal de commande qui est appliqué à l'entrée de commande du PLO 7 à travers le commutateur 43 en position II, comme on le décrira en détail plus loin. En outre le passage de la sortie 40 au niveau haut provoque la commutation des commutateurs 17, 18, 24 et 25 en position II et initie le processus d'ajustement initial de l'égaliseur 14, processus connu en soi qui ne sera pas décrit en détail. Le générateur 36 fournit simultanément à chaque instant de signalisation les composantes en phase et en quadrature de chacun des symboles de la séquence de référence sur ses lignes de sortie 34 et 35. Ces composantes sont retranchées respectivement des composantes en phase et en quadrature du signal égalisé dans les soustracteurs 29 et 32 pour fournir les composantes en phase et en quadrature du signal d'erreur qui sont appliquées à l'égaliseur 14 par les lignes 30 et 33 et les commutateurs 24 et 25 en position II. Les coefficients de l'égaliseur sont ajustés en fonction du signal d'erreur ainsi déterminé.

Lorsque le récepteur reçoit le message de données, les commutateurs 17, 18, 24, 25 et 43 sont en position I. Le signal reçu dont les composantes en phase et en quadrature sont respectivement disponibles à la sortie des dispositifs d'échantillonnage 5 et 6 est démodulé dans le démodulateur 11, égalisé dans l'égaliseur 14, et les composantes en phase et en quadrature du signal égalisé sont appliquées au système de détection 19 à travers les commutateurs 17 et 18 en position I. A chaque instant de signalisation, le système de détection de données 19 fournit sur les lignes 20 et 21 les composantes du symbole détecté, et sur les lignes 22 et 23 les composantes du signal d'erreur. Les composantes de ce signal d'erreur sont appliquées à travers les commutateurs 24 et 25 en position I à l'égaliseur 14 qui en dérive des signaux de commande pour ajuster ses coefficients. Le maintien de la synchronisation de l'horloge est assuré par le dispositif 42.

On décrira maintenant en détail l'ajustement initial de l'horloge. On supposera que le procédé mis en œuvre par le dispositif d'ajustement initial de l'horloge nécessite un signal de synchronisation d'une durée égale à $p$ périodes T de signalisation. Dans le récepteur illustré sur la figure 1, le signal reçu est échantillonné à m fois la cadence de signalisation $1/T$ par le dispositif 2, et un signal de synchronisation d'une durée de $p$ périodes de signalisation sera reçu sous la forme d'une suite de $N = p \times m$ échantillons. Selon l'invention on choisira alors la ligne à retard 47 avec une longueur telle qu'elle puisse stocker au moins N échantillons. Si on choisit une ligne à retard 47 comprenant N étages, lorsque le détecteur de signaux 39 détecte le début de la séquence d'initialisation d'égaliseur, on sait que les N échantillons stockés dans la ligne à retard 47 sont des échantillons du signal de synchronisation et on peut en dériver le signal de commande pour l'ajustement initial de l'horloge. Cependant, à la transition entre le signal de synchronisation et la séquence d'initialisation d'égaliseur le signal reçu peut être affecté par des phénomènes transitoires ; les échantillons du signal de synchronisation reçu qui précèdent immédiatement le début de la séquence d'initialisation peuvent donc être altérés et il peut être souhaitable de ne pas utiliser ces échantillons altérés pour en dériver le signal de commande pour l'ajustement initial de l'horloge. Selon un mode de réalisation préféré de l'invention on prévoit de ne pas utiliser un nombre prédéterminé G d'échantillons précédant immédiatement le début de la séquence d'initialisation pour en dériver ledit signal de commande comme illustré sur la figure 2. On choisira donc une ligne à retard comprenant au moins N + G étages et lorsque le détecteur de signaux 39 détectera le début de la séquence d'initialisation, on dérivera ledit signal de commande des N échantillons contenus dans la ligne à retard et qui précèdent les G échantillons, lesquels sont de ce fait plus récents que les N échantillons.

Sur la figure 1, on a représenté à titre d'exemple un dispositif d'ajustement initial de l'horloge qui est dérivé de celui décrit dans la demande de brevet européen précitée. En bref, le dispositif décrit dans cette dernière demande de brevet calcule la partie réelle, Re $C_0$, et la partie imaginaire Im $C_0$, du coefficient $C_0$, à la fréquence 1/T, de la transformée de Fourier discrète du signal s (kτ) conformément aux relations :

$$\text{Re } C_0 = \sum_{k=0}^{N-1} s(k\tau) \cos \frac{2\pi}{T} k\tau \tag{3}$$

$$\text{Im } C_0 = - \sum_{k=0}^{N-1} s(k\tau) \sin \frac{2\pi}{T} k\tau . \tag{4}$$

Les quantités Re $C_0$ et Im $C_0$ sont ensuite appliquées à un résolveur qui en dérive la valeur de l'angle dont il faut faire varier la phase de l'horloge pour en obtenir une synchronisation rapide et qui est appliquée au PLO 7 comme signal de commande. Le signal s (kτ) est le signal de synchronisation reçu échantillonné et élevé au carré et le signal de synchronisation est constitué par un signal dont le spectre de fréquence comprend deux composantes aux fréquences

$$f_1 = f_c - 1/2T \text{ et } f_2 = f_c + 1/2T$$

où $f_c$ est la fréquence de la porteuse.

Le récepteur de la figure 1 utilise un signal de synchronisation qui est constitué par les alternances successives entre deux symboles prédéterminés et qui est conforme à l'avis V29 du CCITT. Ce signal a un spectre de fréquences constitué par trois composantes aux fréquences $f_c$, $f_1$ et $f_2$ définies ci-dessus et répond donc aux exigences du dispositif décrit dans la demande de brevet européen précitée. Dans le dispositif de la figure à la place du signal s (kτ) on utilise le signal équivalent que l'on notera x (kτ) qui est la valeur absolue du signal reçu fournie par le dispositif 45. On négligera le rôle du filtre 44 qui sera décrit ultérieurement.

L'application directe des relations (3) et (4) à la présente invention, en choisissant τ = T/4 donnerait

$$\text{Re } C_0 = \sum_{k=0}^{N-1} x(k\tau) \cos \frac{k\pi}{2} \tag{5}$$

$$\text{Im } C_0 = - \sum_{k=0}^{N-1} x(k\tau) \sin \frac{k\pi}{2} . \tag{6}$$

Dans les relations (5) et (6), l'échantillon x' (0) qui correspond à k = 0 est l'échantillon le plus récent du signal reçu et l'échantillon x(N − 1)τ) qui correspond à k = N − 1 est l'échantillon le plus ancien du signal reçu. Dans la présente invention on utilise les N échantillons contenus dans la ligne à retard qui précèdent les G échantillons les plus récents. Si on repère les échantillons dans la ligne à retard par rapport à leur position dans la ligne à retard, et en choisissant comme origine l'entrée de la ligne à retard, on désignera par $x_k$ l'échantillon contenu dans le kième étage de la ligne à retard. En tenant compte de ce changement d'origine dans les indices et du fait que dans la ligne à retard l'échantillon $x_{k-2}$ est plus récent que l'échantillon $x_k$ les relations (5) et (6) peuvent s'écrire :

$$\text{Re } C_0 = \sum_{k=1}^{N} x_{G+k} \cos \frac{k\pi}{2} \tag{7}$$

$$\text{Im } C_0 = \sum_{k=1}^{N} x_{G+k} \sin \frac{k\pi}{2} . \tag{8}$$

On notera que les relations (7) et (8) se réduisent simplement à

$$\operatorname{Re} C_0 = - \sum_{k=0}^{N/2-1} (-1)^k x_{G+2+2k} \tag{9}$$

$$\operatorname{Im} C_0 = \sum_{k=0}^{N/2-1} (-1)^k x_{G+1+2k} \cdot \tag{10}$$

Dans l'exemple illustré sur la figure 1 on a choisi N = 48 et G = 18 ; les relations (9) et (10) deviennent alors :

$$\operatorname{Re} C_0 = - \sum_{k=0}^{23} (-1)^k x_{20+2k} \tag{11}$$

$$\operatorname{Im} C_0 = \sum_{k=0}^{23} (-1)^k x_{19+2k} \cdot \tag{12}$$

Dans le dispositif de la figure 1, et en application des relations (11) et (12), les échantillons $x_{20}$, $x_{22}$, ..., $x_{26}$ sont appliquées respectivement à des entrées (−), (+), ... (+) du dispositif de sommation 48 qui fournit à sa sortie la quantité Re Co. De même les échantillons $x_{19}$, $x_{21}$, ..., $x_{65}$ sont appliqués à des entrées (+), (−), ..., (−) du dispositif de sommation 49 qui fournit à sa sortie la quantité Im Co. Les quantités Re Co et Im Co sont appliquées au résolveur 53 qui en dérive la valeur de l'angle dont il faut faire varier la phase du PLO 7. L'homme de l'art comprendra que bien que dans le récepteur de la figure 1 on ait placé les portes 50 et 52 aux entrées du résolveur 53 celles-ci peuvent être remplacées par une seule porte à la sortie du résolveur 53, et que les portes 50 et 52 ne constituent qu'un exemple de moyen pour appliquer sélectivement le signal de commande au PLO 7.

On décrira maintenant en détail le détecteur de sigaux 39 en se référant à la figure 3. On supposera, à titre d'exemple, que la séquence de mise en route reçue par le récepteur de la figure 1 comprend le signal de synchronisation décrit plus haut suivi par une séquence d'initialisation d'égaliseur faisant partie de la famille des séquences dites CAZAC et dont on trouvera des exemples dans la demande de brevet français N° 75 40417 publiée sous le N° 2 337 465.

Une séquence CAZAC a un spectre de fréquence constitué de composantes d'amplitude constante qui s'étend sur toute la bande passante du canal de transmission.

Le détecteur de signaux 39 représenté en détail sur la figure 3 utilise les propriétés spectrales du signal de synchronisation et de la séquence d'initialisation pour les détecter. En se référant à la figure 3, les sorties du démodulateur 11 sont reliées respectivement par les lignes 37 et 38 à l'entrée de deux filtres réjecteurs identiques 60 et 61. Ces deux filtres sont des filtres réjecteurs centrés sur la fréquence 1/2T Hz et qui rejettent cette fréquence. Chacun de ces filtres aura typiquement comme fonction de transfert $(1 + Z^{-1})$. Les sorties des filtres 60 et 61 sont appliquées respectivement à deux dispositifs de détermination de valeur absolue 62 et 63 dont les sorties sont reliées respectivement aux entrées d'un additionneur binaire 64. La sortie de l'additionneur 64 est reliée à un intégrateur numérique 65 dont la sortie est appliquée à l'entrée (+) d'un comparateur 66.

Les sorties des filtres 60 et 61 sont en outre appliquées respectivement à l'entrée de deux filtres réjecteurs identiques 67 et 68 qui sont des filtres qui rejettent la composante continue. Chacun de ces filtres aura typiquement comme fonction de transfert $(1-Z^{-1})$. Les sorties des filtres 67 et 68 sont appliquées respectivement à deux dispositifs de détermination de valeur absolue 69 et 70 identiques aux dispositfs 62 et 63. Les sorties des dispositifs 69 et 70 sont appliquées aux entrées d'un additionneur binaire 71 qui a sa sortie reliée à travers un intégrateur numérique 72 à une entrée de deux multiplicateurs binaires 73 et 74 et à l'entrée (+) d'un comparateur 75 dont la sortie constitue la sortie 40 du détecteur de signaux 39.

La sortie du dispositif de détermination de valeur absolue 45 (figure 1) est reliée par la ligne 46 à un intégrateur numérique 76 dont la sortie est échantillonnée à la cadence 1/T dans un dispositif d'échantillonnage 77. La sortie du dispositif 77 est reliée à l'entrée (+) d'un comparateur 78 et à l'entrée (−) du comparateur 75.

Le comparateur 78 a son entrée (−) reliée à la sortie du multiplicateur 73 qui reçoit à son autre entrée une quantité a. Le comparateur 66 a son entrée (−) reliée à la sortie du multiplicateur 74 qui reçoit à son autre entrée une quantité b. Les sorties des comparateurs 66 et 78 sont reliées aux entrées d'une porte ET 79 dont la sortie est appliquée à une bascule à verrouillage 80. La sortie de la bascule 80 constitue la sortie 51 du détecteur de signaux 39.

Comme on l'a vu plus haut, le signal de synchronisation a un spectre de fréquences composé de trois composantes aux fréquences $f_1$, $f_2$ et $f_c$.

La détection du signal de synchronisation peut ainsi se ramener à la détection de la présence simultanée de composantes aux fréquences $f_1$, $f_2$ et $f_c$ dans le signal reçu.

Après démodulation du signal par la porteuse de fréquence $f_c$ dans le démodulateur 11, les deux composantes aux fréquences $f_1$ et $f_2$ sont transformées en une seule composante à la fréquence 1/2T et la composante à la fréquence $f_c$ est transformée en une composante continue. Ainsi donc, la détection du signal de synchronisation peut aussi se ramener à la détection de la présence simultanée d'une composante continue et d'une composante à la fréquence 1/2T dans le signal démodulé.

Dans le dispositif de la figure 3, la détection du signal de synchronisation est réalisée par une combinaison de deux possibilités ci-dessus. On détecte la présence des composantes aux fréquences $f_1$ et $f_2$ dans le signal reçu et on détecte la présence de la composante à la fréquence $f_c$ en détectant la présence d'une composante continue dans le signal démodulé. La composante en phase du signal démodulé est filtrée par le filtre 60 qui en rejette la composante à la fréquence 1/2T et le dispositif 62 fournit la valeur absolue de la sortie du filtre 60. De même la composante en quadrature du signal démodulé est filtrée par le filtre 61 et le dispositif 63 fournit la valeur absolue de la sortie du filtre 61. Ces valeurs absolues sont sommées en 64 et on obtient à la sortie de l'intégrateur 65 une mesure d'énergie Ec. Le signal reçu disponible à la sortie du convertiseur analogique-numérique 3 est filtré par le filtre 44 (figure 1) qui rejette la composante à la fréquence $f_c$. Le dispositif 45 fournit la valeur absolue de la sortie du filtre 44. La sortie du dispositif 45 est appliquée par la ligne 46 à l'intégrateur 76 dont la sortie, échantillonnée à la cadence 1/T par le dispositif d'échantillonnage 77 fournit une mesure d'énergie Eny. Dans le récepteur de la figure 1, on a représenté le filtre 44 et le dispositif 45 à l'extérieur du détecteur de signaux 39 parce que, selon un mode de réalisation préféré de l'invention, plutôt que de charger la ligne à retard 47 (figure 1) directement avec des échantillons du signal reçu, on préfère prendre avantage du fait que le récepteur contienne le filtre 44 et le dispositif 45 et on charge la ligne à retard 47 avec les échantillons fournis par le dispositif 45 qui sont moins altérés par le bruit.

Les sorties des filtres 60 et 61 sont filtrées respectivement par les filtres 67 et 68 qui rejettent la composante continue puis les dispositifs 69 et 70 en déterminent la valeur absolue, respectivement. Ces valeurs absolues sont sommées en 71 et l'intégrateur 72 fournit une mesure d'énergie En.

Lorsque le signal de synchronisation est reçu, l'énergie Eny est une mesure de l'énergie des composantes aux fréquences $f_1$ et $f_2$ du signal reçu, l'énergie $E_c$ est une mesure de l'énergie de la composante continue du signal démodulé, et l'énergie En est une mesure du bruit. Le signal de synchronisation est détecté lorsque les deux contidions suivantes sont vérifiées :

$$\text{Eny} > a \, \text{En} \qquad\qquad (13)$$
$$\text{Ec} > b \, \text{En} \qquad\qquad (14)$$

où a et b sont des paramètres dont les valeurs sont déterminées d'après le rapport signal/bruit et la distorsion en ligne attendue pour une vitesse de transmission donnée. Des valeurs typiques pour une transmission à 9 600 bps sur une ligne conditionnée du type C1 sont a = 2 et b = 5.

Lorsque les conditions (13) et (14) sont vérifiées les sorties des comparateurs 66 et 78 passent au niveau haut et la sortie 51 du détecteur de signaux 39 passe au niveau haut.

Le dispositif de la figure 3 utilise les différences entre les spectres de la séquence d'initialisation et du signal de synchronisation pour détecter la séquence d'initialisation. Comme on l'a vu plus haut, lorsque le signal de synchronisation est reçu, l'énergie En est représentative du bruit et l'énergie Eny lui est supérieure. Lorsque la séquence d'initialisation arrive, l'énergie En croît brusquement car la séquence d'initialisation a un spectre de fréquence qui s'étend sur toute la bande passante et les filtres 60, 61, 67 et 68 ne rejettent que la composante continue et la composante à la fréquence 1/2T. La séquence d'initialisation est détectée lorsque l'énergie En devient supérieure à l'énergie Eny, c'est-à-dire lorsque la condition suivante est vérifiée :

$$\text{En} > \text{Eny} \qquad\qquad (15)$$

Lorsque cette condition est vérifiée, la sortie du comparateur 75 passe au niveau haut et la sortie 40 du détecteur de signaux 39 passe au niveau haut.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

**Revendications**

1. Procédé pour commander l'ajustement initial de l'horloge d'un récepteur de données synchrone du type comprenant une horloge et un égaliseur adaptatif, et ce pendant une période de mise en route au cours de laquelle le récepteur reçoit un signal de synchronisation d'horloge suivi par une séquence d'initialisation d'égaliseur, caractérisé en ce qu'il comprend les étapes suivantes :

a) l'échantillonnage du signal reçu,

b) le stockage des échantillons du signal reçu dans un moyen d'emmagasinage,

c) la détection successive du signal de synchronisation, et du début de la séquence d'initialisation d'égaliseur, et

d) la détermination d'un signal de commande pour commander l'ajustement initial de l'horloge à partir des échantillons qui sont stockés dans des positions prédéterminées dudit moyen d'emmagasinage, en réponse à la détection du début de la séquence d'initialisation.

2. Procédé selon la revendication 1, caractérisé en ce que lesdits échantillons stockés dans lesdites positions prédéterminées dudit moyen d'emmagasinage sont les échantillons qui précèdent un nombre donné G d'échantillons qui sont les plus récents à l'instant où le début de la séquence d'initialisation est détecté.

3. Procédé selon l'une quelconque des revendications 1 et 2 utilisé dans un récepteur adapté pour recevoir des données transmises par modulation d'une porteuse de fréquence $f_c$ à une cadence de signalisation 1/T, et utilisant un signal de synchronisation dont le spectre de fréquence comprend trois composantes distinctes aux fréquences $f_c$, $f_1 = f_c - 1/2T$ et $f_2 = f_c + 1/2T$, caractérisé en ce que l'étape b) comprend les sous-étapes suivantes :

b1) le filtrage du signal reçu échantillonné de façon à en rejeter la composante à la fréquence $f_c$, et

b2) le stockage des échantillons du signal reçu et filtré dans un moyen d'emmagasinage.

4. Procédé selon la revendication 3 caractérisé en ce que la sous-étape b2) comprend les sous-étapes suivantes :

la détermination de la valeur absolue des échantillons du signal reçu et filtré, et

le stockage des valeurs absolues des échantillons du signal filtré qui sont stockées dans un moyen d'emmagasinage, l'ajustement initial de l'horloge étant obtenu à partir des valeurs absolues stockées dans lesdites positions prédéterminées dudit moyen d'emmagasinage.

5. Dispositif pour l'ajustement initial de l'horloge d'un récepteur de données synchrone conformément au procédé selon la revendication 3, caractérisé en ce qu'il comprend :

un moyen d'échantillonnage (2) pour échantillonner le signal reçu à une cadence 1/τ qui est un multiple de la cadence de signalisation,

un filtre (44) pour filtrer le signal reçu échantillonné de façon à en rejeter la composante à la fréquence $f_c$,

une ligne à retard (47) pour emmagasiner les échantillons du signal reçu filtré,

des moyens (39) pour détecter le signal de synchronisation et la séquence d'initialisation, et

des moyens (48, 49, 50, 52, 53) pour déterminer un signal de commande pour l'ajustement initial de l'horloge à partir des échantillons qui sont stockés dans des positions prédéterminées de la ligne à retard, en réponse à la détection successive du signal de synchronisation et de la séquence d'initialisation.

6. Dispositif selon la revendication 5 caractérisé en ce qu'il comprend un moyen (45) pour déterminer la valeur absolue des échantillons du signal reçu filtré, et en ce que ce sont les valeurs absolues des échantillons du signal filtré qui sont stockées dans ledit moyen d'emmagasinage, et en ce que l'ajustement initial de l'horloge est obtenu à partir des valeurs absolues stockées dans lesdites positions prédéterminées dudit moyen d'emmagasinage

## Claims

1. In a synchronous data recever of the type that includes a clock and an adaptive aqualizer, a method for effecting the initial adjustment of the clock during a turn on period in the course of which the receiver receives a clock synchronization signal followed by an equalizer training sequence, characterized in that it includes the steps of :

a) sampling the received signal,

b) storing samples of the received signal into a storage means,

c) successively detecting the synchronization signal and the beginning of the equalizer training sequence, and

d) deriving a control signal for controlling the initial adjustment of the clock from the samples stored in predetermined locations in said storage means, in response to the detection of the beginning of the training sequence.

2. A method according to claim 1, characterized in that said samples stored in said predetermined locations in said storage means are those samples which precede a given number G of samples which are the newest samples at the instant the beginning of the training sequence is detected.

3. A method according to claim 1 or 2 which is used in a receiver adapted to receive data transmitted by modulating a carrier of frequency $f_c$ at a signaling rate 1/T, and employing a synchronization signal whose frequency spectrum includes three distinct components at frequencies $f_c$, $f_1 = f_c - 1/2T$ and $f_2 = F_c + 1/2T$, characterized in that said step b) includes the sub-steps of :

b1) filtering the sampled input signal to reject the component at frequency $f_c$, and

b2) storing samples of the filtered input signal into a storage means.

4. A method according to claim 3, characterized in that said sub-step b2) includes the sub-steps of : determining the absolute value of the diltered input signal, and storing in a storage means the absolute values of the filtered signal samples, the initial adjustment of the clock being effected from the absolute values stored in said predetermined locations in said storage means.

5. A device for effecting the initial adjustment of the clock in a synchronous data receiver according to the method of claim 3, characterized in that it includes :

sampling means (2) for sampling the received signal at a rate $1/\eta$ which is a multiple of the signaling rate,

filter means (44) for filtering the sampled input signal so as to reject the component at frequency $f_c$,

delay line means (47) for storing the samples of the filtered input signal,

means (39) for detecting the synchronization signal and the training sequence, and

means (48, 49, 50, 52, 53) for deriving a control signal for effecting the initial adjustment of the clock from the samples stored in predetermined locations of in said delay line means, in response to the detection, in succession, of the synchronization signal and of the training sequence.

6. A device according to claim 5, characterized in that it includes means (45) for determining the absolute values of the samples of the filtered input signal, and in that the absolute values of the samples of the filtered signal are stored in said storage means, the initial adjustment of the clock being effected from the absolute values stored in said predetermined locations in said storage means.


**Patentansprüche**

1. Verfahren zum Steuern der Beginneinstellung des Taktgebers für einen Empfänger für synchrone Daten, der einen Taktgeber und einen Anpassausgleicher aufweist, während einer Inbetriebsetzung-Zeit, bei der dem Empfänger ein von einer Initialisierungssequenz des Ausgleichers gefolgtes Synchronisiersignal zugefuehrt ist, dadurch gekennzeichnet, dass das Verfahren folgende Schritte aufweist :

a) die Probenahme des empfangegenen Signals,

b) die Einspeicherung der dem empfangenen Signal entsprechenden Proben in einem Speichermittel,

c) die Erkennung zunächst eines Taktsignals und anschliessend des Beginns der Initialisierungssequenz, und

d) die Festlegung eines Steuersignals zum Steuern der Beginneinstellung des Taktgebers auf die Basis der in vorbestimmten Stellen des Speichermittels eingespeicherten Proben im Ansprechen auf die Erkennung des Beginns der Initialisierungssequenz.

2. Verfahren nach Anspruch 1, dadurch gekennzeichnet, dass die in den vorbestimmten Stellen des Speichermittels eingespeicherten Proben diejenige Proben sind, die vor einer bestimmten Zahl G von den Proben auftreten, die als die ganz letzteren im Augenblick des Beginns der Initialisierungssequenz erkannt wurden.

3. Verfahren nach einem der Ansprüche 1 oder 2, das für einen Empfänger verwendet ist, der derAufnahme von durch Modulation eines Frequenzträgers $f_c$ bei einem Signalisierungstempo $1/T$ übertragenen Daten angepasst ist, und das ein Synchronisiersignal verwendet, dessen Frequenzspektrum drei verschiedenen Komponenten bei den Frequenzen $f_c$, $f_1 = f_c - 1/2T$ und $f_2 = f_c + 1/2T$ aufweist, dadurch gekennzeichnet, dass der Schritt b) folgende Unterschritte aufweist :

b1) das Filtern des empfangenen Signals nach seiner Probenahme, so dass die Komponente bei der Frequenz $f_c$ unterdrückt wird,

b2) die Einspeicherung der aus dem empfangenen und filtrierten Signal entnommenen Proben in einem Speichermittel.

4. Verfahren nach Anspruch 3, dadurch gekennzeichnet, dass der Unterschritt b2) folgende Unterschritte aufweist :

die Festlegung des Absolutwerts der aus dem empfangenen und filtrierten Signal entnommenen Proben, und

die Einspeicherung der in einem Speichermittel gespeicherten Absolutwerte der aus dem filtrierten Signal entnommenen Proben, wobei die Beginneinstellung des Taktgebers auf die Basis der in den vorbestimmten Stellen des Speichermittels gespeicherten Absolutwerte ermittelt ist.

5. Vorrichtung fuer die Beginneinstellung des Taktgebers eines Empfängers für synchrone Daten gemäss dem im Anspruch 3 beschriebenen Verfahren, dadurch gekennzeichnet, dass sie aufweist :

ein Probenahme-Mittel (2), um Proben aus dem empfangenen Signal bei einem Tempo $1/\tau$ zu entnehmen, indem dieser Tempo ein Mehrfaches von der Signalisierungstempo ist,

ein Filter (44) zum Filtern des empfangenen Signals nach seiner Probenahme, so dass die Komponente bei der Frequenz $f_c$ unterdrückt wird,

eine Verzögerungsleitung (47) zur Einspeicherung der aus dem empfangenen und filtrierten Signal entnommenen Proben,

**0 036 084**

Mittel (39) zur Erkennung des Synchronisiersignals und der Initialisierungssignal, und

Mittel (48, 49, 50, 52, 53) zur Festlegung eines Steuersignals für die Beginneinstellung des Taktgebers auf die Basis der in vorbestimmten Stellen der Verzögerungsleitung gespeicherten Proben im Ansprechen auf die Erkennung zunächst des Synchronisiersignals und anschliessend der Initialisierungssequenz.

6. Vorrichtung nach Anspruch 5, dadurch gekennzeichnet, dass sie ein Mittel (45) zur Festlegung des Absolutwerts der aus dem empfangenen und filtrierten Signal entnommenen Proben aufweist, und dass die in dem Speichermittel gespeicherten Werte gerade die Absolutwerte der aus dem filtrierten Signal entnommenen Proben sind, und dass die Beginneinstellung des Taktgebers auf die Basis der in den vorbestimmten Stellen des Speichermittels gespeicherten Absolutwerte ermittelt sind.

FIG. 1

$\cos 2\pi f n T$

$\sin 2\pi f_c n T$

0 036 084

# FIG. 2

SIGNAL | SYNCHRO. | SEQUENCE | INIT.

N | G

TEMPS

# FIG. 3